**Europäisches Patentamt**

**European Patent Office**

**Office européen des brevets**

(19)

(11) Veröffentlichungsnummer: **0 211 343**
**B1**

(12)

# EUROPÄISCHE PATENTSCHRIFT

(45) Veröffentlichungstag der Patentschrift:
**05.10.88**

(51) Int. Cl.⁴: **B 01 D 53/08,** B 01 D 46/34,
B 01 J 8/10

(21) Anmeldenummer: **86110215.0**

(22) Anmeldetag: **24.07.86**

(54) Vorrichtung zum Behandeln von Substanzen in einem Gasstrom.

(30) Priorität: **30.07.85 DE 3527187**

(43) Veröffentlichungstag der Anmeldung:
**25.02.87 Patentblatt 87/9**

(45) Bekanntmachung des Hinweises auf die Patenterteilung:
**05.10.88 Patentblatt 88/40**

(84) Benannte Vertragsstaaten:
**AT BE CH DE FR GB IT LI LU NL SE**

(56) Entgegenhaltungen:
**CH - A - 615 841**
**FR - A - 2 347 962**
**GB - A - 2 067 918**
**NL - C - 45 666**

(73) Patentinhaber: **Firma Andre Büechi Kalk- und**
**Portlandzementwerk Regensburg - Walhallastrasse,**
**Brandlberger Strasse 182, D-8400 Regensburg (DE)**

(72) Erfinder: **Sgaslik, Fritz, Haidhofweg 16,**
**D-8400 Regensburg (DE)**

(74) Vertreter: **Graf, Helmut, Dipl.-Ing. et al, Patentanwälte**
**Dipl.-Ing. A. Wasmeier Dipl.-Ing. H. Graf Greflinger**
**Strasse 7 Postfach 382, D-8400 Regensburg (DE)**

ACTORUM AG

## Beschreibung

Die Erfindung bezieht sich auf eine Vorrichtung zum Behandeln von Substanzen in einem Gasstrom entsprechend dem Oberbegriff des Patentanspruches 1.

Eine Vorrichtung dieser Art ist an sich bekannt (DE-PS 3 002 773).

Soweit diese bekannte Vorrichtung als Filteranlage verwendet wird, wird sie vielfach auch als «Gegenstromschüttschichtfilter» bezeichnet. Ein solches Filter dient beispielsweise zum Entstauben von Gas bei der Kalk- oder Zementherstellung. Als Behandlungs- oder Filtermedium eignet sich bei der bekannten Vorrichtung üblicher Filterkies oder aber auch Fraktionen desjenigen Materials, welches das im Arbeitsprozess befindliche Massengut bildet und auf welches beispielsweise die in dem zu reinigenden Gas bzw. in der zu reinigenden Luft enthaltenen, auszufilternden Partikel (Staubpartikel) zurückzuführen sind.

Bei dem bekannten Filter sind die ortsfest im Inneren eines Gehäuses konzentrisch zu einer vertikalen Achse bzw. Symmetrieachse angeordneten und übereinanderliegenden, ringförmigen Behandlungsräume so ausgebildet, dass mit Ausnahme des untersten Behandlungsraumes jeder Behandlungsraum mit dem von seinen Wänden begrenzten unteren Teil in den oberen Teil des darunterliegenden Behandlungsraumes hineinreicht und dort mit dem darunterliegenden Behandlungsraum durch eine Durchlassöffnung in Verbindung steht. Das frische, d.h. noch nicht dem Arbeitsprozess in der Vorrichtung unterzogene Behandlungs- oder Filtermedium wird jedem Behandlungsraum an dessen oberer Einlassöffnung über mehrere, entsprechende Öffnungen aufweisende ortsfeste Kanäle zugeführt, die sich jeweils in vertikaler Richtung erstrecken und in gleichmässigen Abständen um die Behandlungsräume verteilt angeordnet sind. Zum Abführen des Behandlungsmediums aus den Behandlungsräumen im Bereich der unteren Auslassöffnungen dieser Räume sind bei der bekannten Vorrichtung Abräumvorrichtungen vorgesehen, und zwar für jeden Behandlungsraum wenigstens eine Abräumvorrichtung. Sämtliche Abräumvorrichtungen, die beispielsweise von Abstreifern gebildet sind und sich durch die an den unteren Auslassöffnungen entstehenden Schüttkegel des Behandlungsmediums hindurchbewegen, sind an einer Welle befestigt, die achsgleich mit der Symmetrieachse der Behandlungsräume liegt und um diese Achse rotierend angetrieben ist.

Die bekannte Vorrichtung, die nicht nur als Filter geeignet ist, sondern generell zur Behandlung von Substanzen in einem Gaststrom, beispielsweise auch zur Absorption und/oder Adsorption, verwendet werden kann, um z.B. Gasbestandteile, wie Fluor usw., aus einem Gasstrom zu entfernen bzw. auszufiltern, oder aber auch als Reaktor verwendet werden kann, um zwischen dem Behandlungsmedium und dem Gasstrom oder im Gasstrom vorhandenen Substanzen eine chemische Reaktion zu erzeugen, oder aber, um das Behandlungsmedium durch den Gasstrom zu trocknen, hat durch die Ineinanderschachtelung der einzelnen Behandlungsräume sowie durch die im unteren Teil dieser Behandlungsräume (mit Ausnahme des untersten Behandlungsraumes) vorgesehenen Durchlassöffnungen erhebliche Vorteile. So wird durch diese Konstruktion zunächst einmal verhindert, dass sich im unteren Bereich der Behandlungsräume, d.h. im Wirkungsbereich der Abräumvorrichtungen, in Ecken oder Toträumen Behandlungsmedium ablagern, verklumpen oder einen die Abräumvorrichtungen bzw. deren Wirkung behindernder Belag bilden könnte. Ein weiterer wesentlicher Vorteil der bekannten Vorrichtung besteht auch noch darin, dass sich durch die Ineinanderschachtelung der Behandlungsräume sowie durch die Tatsache, dass mit Ausnahme des untersten Behandlungsraumes jeder Behandlungsraum mit seinem unteren Teil mit dem darunterliegenden Behandlungsraum durch die Auslassöffnung in Verbindung steht, sich ein besonders vorteilhafter, das Behandlungsergebnis wesentlich verbessernder «Schleusen-Effekt» ergibt, und zwar in der Form, dass das an der unteren Auslassöffnung für das Behandlungsmedium in einen Behandlungsraum eintretende Gas das Behandlungsmedium nicht am oberen Bereich dieses Behandlungsraumes sondern (wegen des kürzeren Strömungsweges) am oberen Bereich des darunterliegenden Behandlungsraumes verlässt. Auch dann, wenn mit Hilfe der Abräumvorrichtungen das Behandlungsmedium abgeführt wird und dieses Medium in den Behandlungsräumen demnach von oben nach unten nachrutscht, findet das Gas auf seinem Weg durch das Behandlungsmedium immer eine ausreichende Menge an Medium vor, die (Menge) sich gerade in Ruhe befindet und in der die angestrebte Behandlungswirkung (z.B. Absorption, Adsorption oder Filterwirkung) in optimaler Weise erreicht wird. Dies ist im wesentlichen darauf zurückzuführen, dass dann, wenn Behandlungsmedium durch die Abräumvorrichtungen aus den Behandlungsräumen im unteren Bereich abgeführt wird, das Nachrutschen des Behandlungsmediums im oberen Bereich dieser Behandlungsräume jeweils mit zeitlicher Verzögerung erfolgt.

Ein weiterer, wesentlicher Vorteil der bekannten Vorrichtung besteht schliesslich auch darin, dass durch die Ineinanderverschachtelung der Behandlungsräume absolut gasdichte Verbindungen zwischen den einzelnen, die Behandlungsräume bildenden Wänden entfallen können, da evtl. Verbindungsstellen zwischen diesen Wänden stets von Behandlungsmedium umgeben sind, welches dann, selbst bei nicht gasdicht oder luftdicht ausgeführten Verbindungsstellen (Schweissnähten) einen direkten Gasstrom zwischen der ersten und zweiten Kammer vermeidet.

Obwohl die bekannte Vorrichtung somit in konstruktiver, aber auch in wirkungsmässiger Hinsicht sehr vorteilhaft ist, haftet ihr dennoch ein gewisser Nachteil an. Dadurch, dass das frische Behandlungsmedium über mehrere, um die Behandlungsräume verteilt angeordnete, vertikale Kanäle zugeführt wird, die über Öffnungen jeweils mit der oberen Einlassöffnung jedes Behandlungsraumes in Verbindung stehen, bilden sich im Bereich dieser Öffnungen der Kanäle zum Zuführen des Behandlungsmediums an der Oberseite jedes Behandlungsraumes nicht nur zwangsläufig Schüttkegel aus Behandlungsmedium aus, d.h. die Gesamthöhe des Behandlungsmediums ist in jedem Behandlungsraum nicht völlig gleichförmig, vielmehr im Bereich der Kanäle zum Zuführen des frischen Behandlungsmediums grösser als im Bereich zwischen zwei solchen Kanälen, sondern besteht auch, bei Verwendung eines Behandlungsmediums, welches sich aus Partikeln unterschiedlicher Korngrösse zusammensetzt, die Tendenz, dass die feineren Partikel des Behandlungsmediums im wesentlichen auf solche Bereiche der Behandlungsräume konzentriert sind, die den Kanälen zum Zuführen des frischen Behandlungsmediums unmittelbar benachbart liegen. In Bereichen der Behandlungsräume zwischen zwei solchen Kanälen befindet sich dann bevorzugt gröberes Behandlungsmedium. Da ein Behandlungsmedium feinerer Körnung zwar zu einer verbesserten Behandlungswirkung führt, jedoch einen höheren Strömungswiderstand für das Gas bewirkt, wird sich bei der bekannten Vorrichtung der Gasstrom hauptsächlich auf solche Bereiche der Behandlungsräume konzentrieren, in denen sich das Behandlungsmedium gröberer Körnung befindet, d.h. auf Bereiche zwischen zwei benachbarten Kanälen zum Zuführen des Behandlungsmediums. In diesen Bereichen, in denen hauptsächlich das Behandlungsmedium gröberer Körnung vorhanden ist, ergibt sich dann nicht die optimal mögliche Behandlungswirkung.

Der Erfindung liegt die Aufgabe zugrunde, eine Vorrichtung der eingangs geschilderten Art erfindungsgemäss so weiterzubilden, dass sich in den einzelnen Behandlungsräumen eine gleichmässige Verteilung für das Behandlungsmedium hinsichtlich Höhe und auch Körnung ergibt, und zwar unter Beibehaltung der grundsätzlichen Vorteile der bekannten Vorrichtung.

Zur Lösung dieser Aufgabe ist die Vorrichtung erfindungsgemäss entsprechend dem kennzeichnenden Teil des Patentanspruches 1 ausgebildet.

Zusätzlich zu den Vorteilen der bekannten Vorrichtung weist die erfindungsgemässe Vorrichtung auch den Vorteil auf, dass durch die rotierende Anordnung der Behandlungsräume bzw. durch deren Ausbildung als um die Symmetrieachse drehbar gelagerte und rotierende angetriebene, rotorartige Einheit in Verbindung mit der ortsfesten Anordnung des wenigstens einen Kanals zum Zuführen des frischen Behandlungsmediums das Behandlungsmedium an jeden Behandlungsraum gleichmässig auf einer raupen- oder ringförmigen Linie abgegeben wird. Hierdurch wird dafür gesorgt, dass die Höhe des Behandlungsmediums in jedem Behandlungsraum in allen Bereichen gleich ist und dass bei der Abgabe des Behandlungsmediums an die Behandlungsräume auch keine Entmischung des Behandlungsmediums nach grösseren und feineren Partikeln in der Weise erfolgt, dass in bestimmten Bereichen der Behandlungsräume hauptsächlich Partikel grösserer Körnung konzentriert wären.

Mit der erfindungsgemässen Vorrichtung lässt sich somit eine ganz erhebliche Verbesserung der Behandlungswirkung (z.B. Absorption, Adsorption oder Filterwirkung) erreichen.

Bei einer bevorzugten, insbesondere als Filter verwendeten Ausführungsform der erfindungsgemässen Vorrichtung weist die erste Kammer an ihrer Oberseite einen Einlass für das Gas auf. Das zu reinigende Gas durchströmt damit diese erste Kammer von oben nach unten mit dem Vorteil, dass die in dem zu reinigenden Gas enthaltenen Staubpartikeln sich gleichmässig auf die übereinander angeordneten Behandlungsräume verteilen.

Bei einer weiteren, vorteilhaften und ebenfalls als Filter dienenden Ausführung der Erfindung ist vorgesehen, das aus den Behandlungsräumen mit Hilfe der Abräumvorrichtungen entfernte Behandlungsmedium über eine Fördereinrichtung an eine Einrichtung zum Reinigen bzw. Regenerieren des Behandlungsmediums zuzuführen und das so gereinigte bzw. regenerierte Behandlungsmedium wiederum erneut zu verwenden. Hierbei wird das von den Behandlungsräumen mit Hilfe der Abräumvorrichtungen entfernte Behandlungsmedium vor dem Reinigen bzw. Regenerieren erhitzt, so dass bei einer im Bereich des Taupunktes oder unter dem Taupunkt arbeitenden Vorrichtung ein einwandfreies Behandlungsergebnis sichergestellt ist. Die Beheizung des von den Behandlungsräumen entfernten Behandlungsmediums kann auf verschiedene Weise erfolgen, beispielsweise durch Heissluft, und hat den Vorteil, dass nur die Oberfläche des Behandlungsmediums erhitzt werden muss und nicht die gesamte Masse der dieses Medium bildenden Partikel. Hierdurch ist das Beheizen des Behandlungsmediums und damit das Trennen der durch Feuchtigkeit an dem Behandlungsmedium haftenden Staubpartikel vom Medium mit geringem Energieaufwand möglich, d.h. mit einem Energieaufwand, der für ein Erhitzen des gesamten zu reinigenden Gases oder aber für ein Erhitzen des den Behandlungsräumen zugeführten, frischn Behandlungsmediums oder des Behandlungsmediums in den Behandlungsräumen notwendig wäre.

Weiterbildungen der Erfindung sind Gegenstand der Unteransprüche.

Die Erfindung wird im folgenden anhand der Figuren an einem Ausführungsbeispiel näher erläutert, und zwar im Zusammenhang mit der Verwendung der Vorrichtung als Filter zum Ausfiltern von Staub. Auch diese Ausführungsform der erfindungsgemässen Vorrichtung kann für andere Zwecke, d.h. ganz allgemein zur Behandlung von Substanzen in einem Gasstrom Verwendung finden.

Es zeigen:

Fig. 1 einen Längsschnitt durch ein Filter gemäss der Erfindung;

Fig. 2 einen Querschnitt durch das Filter gemäss Fig. 1 entsprechend der Schnittstelle I-I der Fig. 1.

Das dargestellte Filter besteht aus einem Gehäuse 1 mit einer zylinderförmigen Aussen- bzw. Umfangswand 2, wobei das Gehäuse 1 mit nicht näher dargestellten Stützelementen oder Füssen so gehalten ist, dass die Zylinder bzw. Symmetrieachse S des Gehäuses 1 sich in vertikaler Richtung erstreckt. Das Gehäuse 1 ist an seiner Oberseite durch eine Deckenplatte 3 und an seiner Unterseite durch eine Bodenplatte 4 verschlossen. Die Deckenplatte 3 sowie die Bodenplatte 4 sind jeweils kreisringförmig ausgebildet und an ihrem äusseren Rand mit der Umfangswand 2 abgedichtet verbunden.

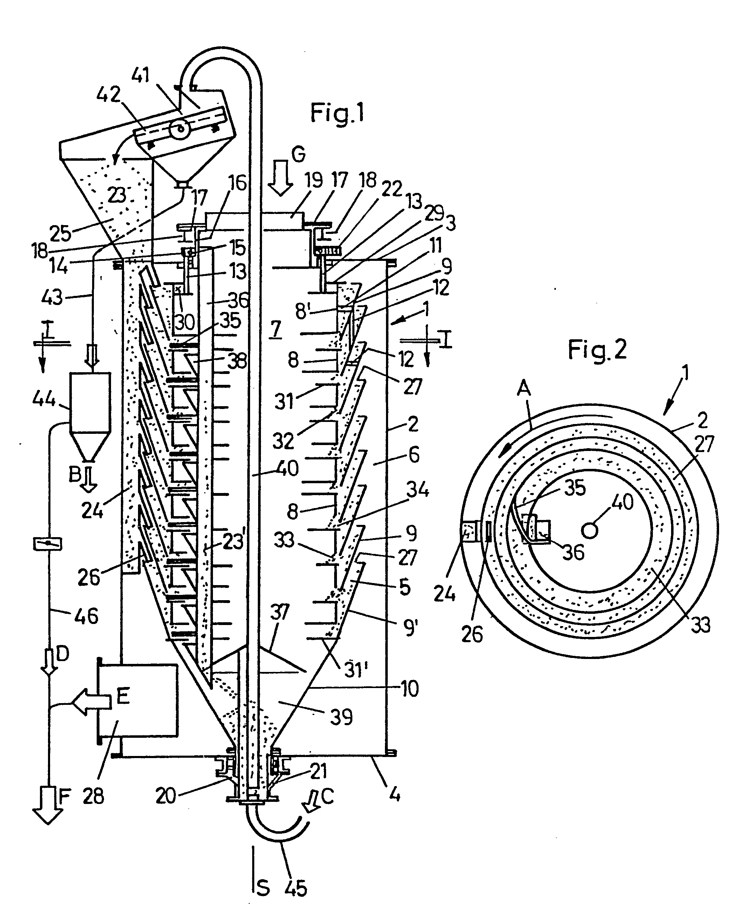

Im Inneren des Gehäuses 1 sind konzentrisch zur Symmetrieachse S übereinander mehrere ringförmig, sich jeweils nach unten verengende und als Filterräume dienende Behandlungsräume 5 (Ringetagen) angeordnet, und zwar in der Weise, dass diese Behandlungsräume in ihrer Gesamtheit den Innenraum des Gehäuses 1 in zwei Kammern unterteilt, nämlich in eine äussere ringförmige Kammer 6, die nach aussen hin durch die Umfangswand 2 und nach innen hin durch die übereinander angeordneten ringförmigen Behandlungsräume 5 begrenzt ist, sowie in eine innere, im wesentlichen zylinderförmige Kammer 7, die nach aussen hin durch die übereinander angeordneten Behandlungsräume 5 abgeschlossen ist. Jeder Behandlungsraum 5 ist zur inneren Kammer 7 hin durch eine innere ringförmige Wand bzw. 8' und nach aussen, d.h. zur äusseren Kammer 6 durch eine Wand 9 bzw. 9' begrenzt. Die Wände 9 bzw. 9' werden von Ringen gebildet, die sich nach oben hin kegelförmig erweitern, d.h. der Durchmesser der von den Wänden 9 bzw. 9' gebildeten Ringe ist an der Oberseite jedes Behandlungsraumes 5 grösser als an der Unterseite dieses Behandlungsraumes, so dass sich die Behandlungsräume in der beschriebenen Art zu ihrem unteren Ende hin verengen. Wie die Fig. 1 weiterhin zeigt, weist die innere Wand 8' des obersten Behandlungsraumes 5 eine grössere Höhe auf als die entsprechenden Wände 8 der darunterliegenden Behandlungsräume, während die äussere Wand 9' des untersten Behandlungsraumes 5 eine grössere Höhe besitzt als die entsprechenden Wände 9 der darüberliegenden Behandlungsräume und an ihrem unteren Ende in einen kegel- oder trichterförmig sich verengenden Wandabschnitt 10 übergeht, der die beiden Kammern 6 und 7 im Bereich unterhalb der Behandlungsräume 5 voneinander trennt. Die Wände 8, 8', 9 und 9' sowie der Wandabschnitt 10 liegen konzentrisch zur Symmetrieachse S. Durch eine Vielzahl von innerhalb der Behandlungsräume angeordneten Streben 11 und 12, die beispielsweise teilweise radial zur Symmetrieachse S verlaufen und die Wände 8 bzw. 8' und 9 der Behandlungsräume 5 miteinander verbinden (Streben 11), sowie teilweise senkrecht zu zwei aufeinanderfolgenden Wänden 9 bzw. 9' verlaufen und diese miteinander verbinden (Streben 12), bilden die Behandlungsräume 5 bzw. die diese Behandlungsräume begrenzenden Wände 8, 8', 9 und 9' zusammen mit dem Wandabschnitt 10 eine starre, die innere Kammer 7 begrenzende rotorartige Einheit, die um die Symmetrieachse S im Inneren des Gehäuses 1 drehbar gelagert ist. Hierfür ist das obere Ende dieser rotorartigen Einheit abgedichtet mit dem unteren Ende eines konzentrisch zur Symmetrieachse S liegenden Ringes 13 verbunden, der an seinem oberen Ende an dem äusseren, mit einer Verzahnung versehenen Ring 14 einer Kugel-Drehverbindung gehalten ist. Der innere Ring 15 dieser Kugel-Drehverbindung ist an dem unteren Ende eines ebenfalls konzentrisch zur Symmetrieachse liegenden Ringes 16 befestigt, der seinerseits mit seinem oberen Rand an einer Abdeckplatte 17 gehalten ist, die sich auf Trägern 18 abstützt, die ihrerseits jeweils beidendig auf nicht näher dargestellten Auflagern an der Oberseite des Gehäuses 1 aufliegen. Über den Ring 15 der Kugel-Drehverbindung, den Ring 16, die Abdeckplatte 17 und die Träger 18 ist somit ein ortsfestes Lager für das obere Ende der die Behandlungsräume 5 aufweisenden rotorartigen Einheit gebildet. In der Abdeckplatte 17, die zusammen mit dem Ring 16 und teilweise auch mit dem Ring 13 die innere Kammer 7 nach oben hin begrenzt, ist der Einlass 19 für das zu reinigende Gas vorgesehen.

Das untere Ende der von den Behandlungsräumen gebildeten rotorartigen Einheit ist an der Bodenplatte 4 drehbar gelagert, und zwar dadurch, dass sich an das untere Ende des Wandabschnittes 10 ein unten verschlossenes Rohr- oder Hohlzylinderstück 20 anschliesst, welches durch die in der ringförmigen Bodenplatte 4 vorgesehene mittlere Öffnung hindurchgeführt ist und ausserhalb des Gehäuses 1 mittels eines Pendel-Gleitlagers 21 an der Bodenplatte 4 gelagert ist.

In die Verzahnung des äusseren Ringes 14 der Kugel-Drehverbindung greift ein Ritzel 22 ein, welches mit einem nicht näher dargestellten Antrieb verbunden ist und mit welchem die von den Behandlungsräumen 5 gebildete rotorartige Einheit um die Symmetrieachse S bei der für die Fig. 2 gewählten Darstellung im Gegenuhrzeigersinn, d.h. in Richtung des Pfeiles A rotierend angetrieben wird.

Zum Zuführen von frischem bzw. gereinigtem Filtermedium 23 ist im Inneren der Kammer 6 und der Innenfläche der Umfangswand 2 unmittelbar benachbart ein in vertikaler Richtung, d.h. parallel zur Symmetrieachse S, sich erstreckender, geschlossener, ortsfester Kanal 24 gebildet, der an seinem unteren Ende ebenfalls verschlossen ist und dessen oberes Ende in einen ausserhalb des Gehäuses 1 über der Deckenplatte 3 angeordneten Vorratsbehälter 25 für das gereinigte Filtermedium 23 mündet. Es versteht sich, dass der Kanal 24 mit seinem oberen Ende bzw. mit dem Übergangsbereich zum Vorratsbehälter 25 abgedichtet durch die Deckenplatte 3 hindurchgeführt ist. Der ortsfest angeordnete Kanal 24 weist an seiner der Symmetrieachse S zugewendeten Seite in Richtung dieser Symmetrieachse übereinander mehrere in den Kanal 24 mündende, schräg nach unten verlaufende und am unteren freien Ende offene, rohrartige Auslassstutzen 26 auf, die einen recheckförmigen Querschnitt besitzen, und von denen jeder in eine obere Öffnung 27 eines Behandlungsraumes 5 hineinreicht, über die dieser Behandlungsraum mit der äusseren Kammer 6 zum Sammeln und Abführen des gereinigten Gases (über den Auslass 28) in Verbindung stehen. Mit Ausnahme des obersten Behandlungsraumes 25 ist die Öffnung 27 bei allen Behandlungsräumen 5 zwischen dem oberen Rand der Wand 9 bzw. 9' des betreffenden Behandlungsraumes 5 und der Aussenfläche des mittleren Bereiches der Wand 9 des darüberliegenden Behandlungsraumes gebildet. Bei dem obersten Behandlungsraum 5 ist die Öffnung 27 zwischen dem oberen Rand eines konzentrisch zur Symmetrieachse S und mit seinen Oberflächenseiten senkrecht zu dieser Symmetrieachse liegenden Ringes 29 gebildet, der den oberen Rand der ringförmigen Wand 8' mit dem unteren Bereich des Ringes 13 verbindet, und zwar vorzugsweise über eine kardanähnliche Aufhängung, die in der Fig. 1 allgemein mit 30 angegeben ist und im Inneren der Kammer 7 zusätzlich durch eine nicht näher dargestellte Dichtungsmanschette überbrückt ist. Beim Drehen der von den Behandlungsräumen 5 gebildeten rotorartigen Einheit um die Symmetrieachse S (Pfeil A) wird über die Auslassstutzen 26 das Filtermedium 23 gleichmässig, d.h. auf einer ringförmigen Linie an die einzelnen Behandlungsräume 5 im Bereich der Öffnungen 27 abgegeben. Der besondere Vorteil hierbei ist, dass bei der Abgabe des Filtermediums keine Entmischung dieses Filtermediums in der Form eintritt, dass bestimmte Bereiche der Behandlungsräume 5 nur gröberes und bestimmte Bereiche der Behandlungsräume 5 gröberes und feineres Filtermedium enthalten. Die Verteilung des Filtermediums 23 ist vielmehr über den gesamten Bereich jedes Behandlungsraumes 5 auch hinsichtlich der Körnung dieses Filtermediums gleichmässig.

Die Behandlungsräume 5, die derart ineinander geschachtelt sind, dass — mit Ausnahme des untersten Behandlungsraumes 5 — jeder Behandlungsraum mit seinem unteren Teil, d.h. bei der dargestellten Ausführungsform mit seiner unteren Hälfte, in den darunterliegenden Behandlungsraum hineinreicht, weisen jeweils eine von einem horizontalen, konzentrisch zur Symmetrieachse S liegenden Ring 31 bzw. 31' gebildete Bodenfläche auf, wobei, mit Ausnahme des untersten Behandlungsraumes 5, der Ring 31 jeweils am oberen Rand der Wand 8 des darunterliegenden Behandlungsraumes 5 befestigt ist. Bei dem untersten Behandlungsraum 5 ist der Ring 31' an der äusseren Wand 9' befestigt, und zwar im Bereich der Übergangsstelle zwischen dieser Wand und dem Wandabschnitt 10. Die Ringe 31 bzw. 31' erstrecken sich auch geringfügig in das Innere der Kammer 7 hinein, d.h. der innere Rand dieser Ringe liegt der Symmetrieachse S jeweils näher als die Wände 8 bzw. 8'.

An der Oberseite jedes Ringes 31 bzw. 31' ist für jeden Behandlungsraum 5 eine ringförmige, konzentrisch zur Symmetrieachse S verlaufende Öffnung 32 gebildet, und zwar dadurch, dass der untere Rand der ringförmigen Wand 8 bzw. 8' des betreffenden Behandlungsraumes oberhalb des zugehörigen Ringes endet. Über die Öffnungen 32 stehen die Behandlungsräume 5 mit der inneren Kammer in Verbindung. Der über diese Öffnungen 32 in die innere Kammer 7 vorstehende Bereich der Ringe 31 bzw. 31' bildet mit seiner Oberseite jeweils eine Auflagefläche, auf der sich ein Schüttkegel 33 aus Filtermedium ausbilden kann, welches durch die betreffende Öffnung 32 nach aussen rutscht.

Mit Ausnahme des untersten Behandlungsraumes 5 besitzt jeder Behandlungsraum im Bereich der von dem zugehörigen Ring 31 gebildeten Bodenfläche eine weitere, weiter aussen liegende und ebenfalls ringförmig ausgebildete sowie konzentrisch zur Symmetrieachse S verlaufende Öffnung 34, mit der jeder Behandlungsraum 5 (mit Ausnahme des untersten Behandlungsraumes) jeweils mit dem darunterliegenden Behandlungsraum etwa in dessen mittleren Bereich in Verbindung steht. Die Öffnungen 34 sind dadurch gebildet, dass der untere Rand der Wand 9 jedes Filterraumes mit Abstand oberhalb des zugehörigen Ringes 31 bzw. des äusseren Randes dieses Ringes liegt.

Die einzelnen Behandlungsräume 5 sind somit derart ineinandergeschachtelt, dass jeder Behandlungsraum 5 — mit Ausnahme des untersten Behandlungsraumes — mit seinem unteren, von den Wänden 8 bzw. 8' und dem unteren Abschnitt der Wand 9 begrenzten Teilbereich in den oberen Teilbereich des darunterliegenden Behandlungsraumes hineinreicht, d.h. jeder Behandlungsraum 5 — mit Ausnahme des untersten Behandlungsraumes — ist in seinem unteren Teilbereich vom oberen Teilbereich des darunterliegenden Behandlungsraumes umgeben, was durch die Ausbildung der Wände 9 als ineinandergreifende, d.h. sich jeweils zum unteren Ende hin kegelförmig verengende sowie konisch zur Symmetrieachse S liegende Ringe erreicht wird. Ausserdem steht jeder Behandlungsraum 5 — mit Ausnahme des untersten Behandlungsraumes — mit dem darunterliegenden Behandlungsraum durch eine Öffnung 34 in Verbindung.

Zum Abführen des verbrauchten Filtermediums 23' ist jedem Behandlungsraum 5 eine Abräumvorrichtung zugeordnet, die bei der dargestellten Ausführungsform von einem Abstreifer 35 gebildet ist. Die Abstreifer 35, die jeweils geringfügig über den Ringen 31 bzw. 31' angeordnet sind und sich in die Schüttkegel 33 sowie in das Innere des betreffenden Behandlungsraumes 5 hineinstrecken und mit ihrem radial aussen liegenden Ende bis in die Nähe der Öffnung 34 bzw. (bei dem untersten Behandlungsraum 5) bis in den Bereich der Übergangsstelle zwischen der Wand 9' und dem Ring 31' reichen, sind an einem gemeinsamen, sich in vertikaler Richtung erstreckender Sammelkanal 36 zum Abführen des verbrauchten Filtermediums 23' befestigt. Der Sammelkanal 36, der an seinem oberen Ende verschlossen ist, ist innerhalb der Kammer 7 ortsfest angeordnet, und zwar dadurch, dass das obere Ende dieses Sammelkanals an der Innenseite des Ringes 16 und das untere Ende dieses Sammelkanals an einer drehfest gehaltenen und konzentrisch zur Symmetrieachse S angeordneten Wand 37 befestigt ist. Unter jedem Abstreifer 35 bzw. unter jedem Ring 31 bzw. 31' ist eine in den Sammelkanal 36 mündende und an ihrer Oberseite offene Fangtasche 38 vorgesehen, die das von dem entsprechenden Abstreifer 35 (beim Rotieren der von den Behandlungsräumen 5 gebildeten rotorartigen Einheit relativ zu den Abstreifern 35) den Schüttkegel 33 entnommene verbrauchte Filtermedium auffängt und in den Sammelkanal 36 fördert. Der Sammelkanal 36 reicht mit seinem unteren, offenen Ende durch die kegelförmige Wand 37 hindurch und mündet in eine unterhalb dieser Wand gebildete, von dem Wandabschnitt 10 auch zur Kammer 6 hin getrennte Kammer 39 zum Sammeln bzw. Abführen des verbrauchten Filtermediums 23'. In das untere Ende der Kammer 39, welches (Ende) von dem nach unten hin geschlossenen Innenraum des Hohlzylinderstückes 20 gebildet ist, reicht das offene Ende eines Förderrohres 40, welches mit seiner Achse achsgleich zur Symmetrieachse S liegt und im mittleren Bereich der Einlassöffnung 19 für das Rohrgas bzw. im Bereich eines dort vorgesehenen, nicht näher dargestellten Anschlusses, über welchen das Rohrgas zugeführt wird, abgedichtet nach aussen geführt ist. Das Förderrohr 40 mündet mit seinem oberen Ende in einen nach aussen hin geschlossenen und sich nach unten hin trichterartig verengenden Behandlungsraum 41, und zwar oberhalb eines schräggestellten Rüttelsiebes 42, dessen Auswurfende mit der Kammer 25 in Verbindung steht. Das über das Förderrohr 40 auf das Rüttelsieb 42 aufgebrachte Filtermedium wird auf diesem gereinigt, d.h. die am Filtermedium haftenden Staubpartikel werden vom Filtermedium getrennt und über eine Rohrleitung 43 und ein Filter 44 ausgeschieden, wie dies mit dem Pfeil B angedeutet ist. Das Fördern des Filtermediums im Förderrohr 40 nach oben erfolgt mit Druckluft, die entsprechend dem Pfeil C über ein Rohr 45 zugeführt wird, welches mit seinem offenen Ende im unteren Bereich der Kammer 39 unmittelbar gegenüber dem unteren, offenen Ende des Förderrohres 40 liegt. Durch die aus dem Rohr 45 austretende Druckluft wird somit das in der Kammer 39 befindliche, verbrauchte Filtermedium 23' mitgerissen und so im Förderrohr 40 nach oben auf das Rüttelsieb 42 gefördert. Die Förderluft wird nach dem Durchtritt durch das Filter 44, d.h. im gereinigten Zustand, über eine Leitung 46 entsprechend dem Pfeil D nach aussen abgeführt bzw. in den an den Anlass 28 angeschlossenen, nicht näher dargestellten Reingaskanal eingeleitet und zusammen mit dem aus dem Auslass 28 austretenden (Pfeil E) gereinigten Gas abgeführt (Pfeil F).

Die Wirkungsweise des Filters lässt sich wie folgt beschreiben: Das zu reinigende Gas wird dem Filter entsprechend dem Pfeil G über dem Einlass 19 zugeführt, und zwar im oberen Bereich der Kammer 7. Die Zuführung hat den besonderen Vorteil, dass sich die im zu reinigenden Gas enthaltenen Staubpartikel über die gesamte Höhe der Kammer 7 gleichmässig verteilen können und somit auch die übereinander angeordneten Behandlungsräume 5 jeweils gleich stark mit Staubpartikeln beaufschlagt werden, was dann nicht der Fall wäre, wenn das zu reinigende Gas bzw. Rohrgas der inneren Kammer 7 in deren unterem Bereich zugeführt würde. In diesem Fall würden sich die Staubpartikel im wesentlichen im unteren Bereich der Kammer 7 konzentrieren, so dass die unteren Behandlungsräume 5 stärker mit Staubpartikeln beaufschlagt würden als die oberen Behandlungsräume.

Da zu reinigende Gas tritt dann aus der Kammer 7 durch die Öffnungen 32 in die einzelnen Behandlungsräume 5 ein und durchströmt das in diesen Behandlungsräumen vorhandene Filtermedium 23 von unten nach oben. Das dabei gereinigte Gas verlässt die einzelnen Behandlungsräume an den oberen Öffnungen 27, und zwar bedingt durch die Ineinanderschachtelung der einzelnen Behandlungsräume sowie bedingt durch die zusätzlichen Öffnungen 34 ist der Gasfluss durch die Behandlungsräume derart, dass das an der Öffnung 32 eines Behandlungsraumes eintretende Gas das Filtermedium hauptsächlich an der Öffnung 27 des darunterliegenden Behandlungsraumes 5 wieder verlässt. Dies gilt für alle Behandlungsräume mit Ausnahme des untersten Behandlungsraumes. Durch diese Strömung ergibt sich der für das Filterergebnis besonders günstige Schleuseneffekt, d.h. durch das verzögerte Nachrutschen des Filtermediums in den einzelnen Behandlungsräumen 5 findet das Gas auf seinem Weg durch das Filtermedium stets einen Teil des Filtermediums vor, welches sich in Ruhe befindet und dadurch die optimale Filterwirkung aufweist. Das gereinigte, an den Öffnungen 27 aus dem Filtermedium austretende Gas wird in der äusseren Kammer 6 gesammelt und über den Auslass 28 abgeführt.

Dadurch, dass in der oben beschriebenen Weise durch die um die Symmetrieachse S rotierenden Behandlungsräume 5 eine gleichmässige Zuführung des frischen Filtermediums 23 an die einzelnen Behandlungsräume 5 gewährleistet ist, und dabei insbesondere auch gewährleistet ist, dass in allen Bereichen jedes Behandlungsraumes 5 die Zusammensetzung der Körnung des Filtermediums gleichförmig ist, d.h. keine Bereiche vorhanden sind, in denen hauptsächlich nur Filtermedien grösserer Körnung vorhanden ist, ergibt sich ein völlig gleichmässig verteilter Gasstrom durch die Behandlungsräume 5 und eine optimale Reinigung des Rohgases.

Als Filtermedium eignet sich auch bei diesem Filter Kies oder anderes rieselfähiges Material.

Sofern das Filter in der Nähe des Taupunktes oder aber unter dem Taupunkt betrieben wird, wird über das Rohr 45 heisse Luft zugeführt, durch die dann die Partikel des Filtermediums nur an ihrer Oberfläche so weit erwärmt werden, dass der am Filtermedium haftende Staub trocknet und somit mit Hilfe des Rüttelsiebes 42 entfernt werden kann.

Die Erfindung wurde voranstehend an einem Ausführungsbeispiel beschrieben. Es versteht sich, dass Abwandlungen sowie Änderungen möglich sind, ohne dass dadurch der die Erfindung tragende Gedanke verlassen wird. So ist es selbstverständlich möglich, die Rückführung des verbrauchten, d.h. mit Staubpartikeln angereicherten Filtermediums 23' aus der Kammer 39 sowie die Reinigung dieses Filtermediums auch auf andere Weise, als voranstehend beschrieben, durchzuführen. Für die Rückführung des Filtermediums aus der Kammer 39 können demnach auch mechanische Fördereinrichtungen (Förderbänder, Förderschnecken usw.) Verwendung finden. Für die Reinigung des verbrauchten Filtermediums 23 eignen sich auch trommelartige, rotierend angetriebene Siebe usw.

**Patentansprüche**

1. Vorrichtung zum Behandeln von Substanzen in einem Gasstrom, insbesondere zur Absorption und/oder Adsorption oder zum Filtern von Gasen, mit einer ersten, vorzugsweise inneren Kammer zum Zuführen eines Gases, mit einer zweiten, vorzugsweise äusseren Kammer zum Abführen des Gases und mit mehreren in einer Achsrichtung übereinander angeordneten und zwischen der ersten und zweiten Kammer liegenden ringförmigen Behandlungsräumen, die jeweils durch Wände gegeneinander sowie gegen die erste und zweite Kammer begrenzt sind und jeweils wenigstens eine obere Einlassöffnung für ein aus festen Partikeln bestehendes Behandlungsmedium im oberen Teil und wenigstens eine untere Auslassöffnung für das Behandlungsmedium im unteren Teil besitzen, wobei jedem Behandlungsraum an der oberen Einlassöffnung über wenigstens einen Kanal frisches, gereinigtes und/oder wiederaufbereitetes Behandlungsmedium zugeführt wird und an der unteren, in die erste Kammer mündenden Auslassöffnung jedes Behandlungsraumes eine Abräumvorrichtung zum Abführen des Behandlungsmediums vorgesehen ist, wobei die Auslassöffnungen Einlässe für das Gas in die Behandlungsräume bilden, die jeweils in ihrem oberen Teil mit der zweiten Kammer in Verbindung stehen, wobei jeder Behandlungsraum — mit Ausnahme des untersten Behandlungsraumes — mit dem von seinen Wänden begrenzten unteren Teil in den oberen Teil des darunterliegenden Behandlungsraumes hineinreicht und dort mit dem darunterliegenden Behandlungsraum durch eine Durchlassöffnung in Verbindung steht, dadurch gekennzeichnet, dass die Behandlungsräume (5) bzw. die diese Behandlungsräume (5) begrenzenden Wände (8, 8'; 9, 9') Teil einer um die Achsrichtung (S) drehbar gelagerten und rotierend angetriebenen rotorartigen Einheit sind, und dass der wenigstens eine Kanal (24) zum Zuführen von frischem Behandlungsmedium (23) ortsfest angeordnet ist und in die oberen Einlassöffnungen (27) hineinreichende Abschnitte (26) mit Öffnungen zum Zuführen des Behandlungsmedium (23) aufweist.

2. Vorrichtung nach Anspruch 1, dadurch gekennzeichnet, dass die Abräumvorrichtungen (35) ortsfest angeordnet sind.

3. Vorrichtung nach Anspruch 1 und 2, dadurch gekennzeichnet, dass der wenigstens eine Kanal (24) zum Zuführen des frischen Behandlungsmediums (23) radial ausserhalb der rotorartigen Einheit und die Abräumvorrichtungen (35) radial innerhalb der rotorartigen Einheit angeordnet sind.

4. Vorrichtung nach einem der Ansprüche 1-3, dadurch gekennzeichnet, dass die Abräumvorrichtungen (35) an wenigstens einem, ortsfest angeordneten Sammelkanal (36) zum Abführen des Behandlungsmediums (23') vorgesehen sind, dass Fördermittel (40) vorgesehen sind, um das aus den Behandlungsräumen (5) abgeführte Behandlungsmedium (23') an eine Einrichtung (41, 42) zur Reinigung und/oder zur Wiederaufbereitung zu fördern, die mit einer Kammer (25) zur Aufnahme des frischen bzw. gereinigten oder wiederaufbereiteten Behandlungsmediums (23) in Verbindung steht, die ihrerseits mit dem wenigstens einen Kanal (24) zum Zuführen des Behandlungsmediums (23) an die Behandlungsräume (5) verbunden ist, und dass Mittel vorgesehen sind, um das Behandlungsmedium vor dem Reinigen bzw. Wiederaufbereiten zu erhitzen.

5. Vorrichtung nach Anspruch 4, dadurch gekennzeichnet, dass die Mittel zum Erhitzen des Behandlungsmediums (23') von wenigstens einer Austrittsdüse oder Austrittsöffnung für erhitzte Luft oder erhitztes Gas gebildet sind.

6. Vorrichtung nach einem der Ansprüche 1-5, gekennzeichnet durch einen Einlass (19) für das Gas an der ersten Kammer (8), der sich an der Oberseite dieser Kammer befindet.

## Claims

1. An apparatus for treating substances in a gas stream, in particular for the absorption and/or adsorption or for the filtration of gases, having a first, preferably internal, chamber for supplying a gas, a second, preferably external, chamber for removing the gas, and a plurality of annular treatment spaces which are arranged one above the other in an axial direction and are situated between the first and the second chamber and which in each case are separated from one another and from the first and the second chamber by walls and in each case comprise at least one upper inlet opening for a treatment medium consisting of solid particles in the upper part and at least one lower outlet opening for the treatment medium in the lower part, each treatment space being supplied with fresh, cleaned and/or reprocessed treatment medium at the upper inlet opening by way of at least one duct and a removal apparatus for removing the treatment medium being provided at the lower outlet opening of each treatment space opening into the first chamber, the outlet openings forming inlets for the gas into the treatment spaces which are connected in each case at their upper part to the second chamber, each treatment space — with the exception of the lowest treatment space — extending with its lower part bounded by its walls into the upper part of the treatment space lying below and there being connected to the treatment space lying below by a through opening, characterized in that the treatment spaces (5) or the walls (8, 8'; 9, 9') bounding the said treatment spaces (5) are part of a rotor-like unit mounted so as to be rotatable about the axial direction (S) and driven in a rotating manner, and the duct (24), of which there is at least one, for supplying fresh treatment medium (23) is arranged in a stationary manner and comprises portions (26) which extend into the upper inlet openings (27) and which have openings for supplying the treatment medium (23).

2. An apparatus according to Claim 1, characterized in that the removal apparatus (35) are arranged in a stationary manner.

3. An apparatus according to Claim 1 and 2, characterized in that the at least one duct (24) for supplying the fresh treatment medium (23) is arranged radially outside the rotor-like unit and the removal apparatus (35) are arranged radially inside the rotor-like unit.

4. An apparatus according to any of Claims 1 to 3, characterized in that the removal apparatus (35) are provided on at least one collection duct (36) arranged in a stationary manner for removing the treatment medium (23'), conveying means (40) are provided in order to convey the treatment medium (23') removed from the treatment spaces (5) to a device (41, 42) for cleaning and/or for reprocessing purpose, which (device) is connected to a chamber (25) for receiving the fresh, cleaned or reprocessed treatment medium (23), which (chamber) in turn is connected to the at least one duct (24) for supplying the treatment medium (23) to the treatment spaces (5), and means are provided for heating the treatment medium before the cleaning or reprocessing.

5. An apparatus according to Claim 5, characterized in that the means for heating the treatment medium (23') are formed by at least one discharge nozzle or discharge opening for heated air or heated gas.

6. An apparatus according to any one of Claims 1 to 5, characterized by an inlet (19) for the gas on the first chamber (8), which (inlet) is provided on the upper side of the said chamber.

**Revendications**

1. Appareil de traitement de substances dans un courant gazeux, en particulier d'absorption et/ou d'adsorption ou de filtration de gaz, comportant une première chambre, de préférence intérieure, pour l'amenée d'un gaz, une deuxième chambre, de préférence extérieure, pour l'évacuation de ce gaz et plusieurs cellules annulaires de traitement, placées les unes au-dessus des autres dans une direction axiale et situées entre les première et deuxième chambres, qui sont séparées les unes des autres et desdites chambres par des parois et ont chacune, dans leur partie supérieure, au moins un orifice supérieur d'entrée pour un agent de traitement constitué de particules solides et, dans leur partie inférieure, au moins un orifice inférieur de sortie pour cet agent de traitement, de l'agent de traitement frais, épuré et/ou retraité, étant amené à chaque cellule de traitement à son orifice supérieur d'entrée par au moins un conduit, et un dispositif de déblaiement pour l'évacuation de l'agent de traitement étant prévu à l'orifice inférieur de sortie, débouchant dans la première chambre, de chaque cellule de traitement, les orifices de sortie formant des entrées pour l'entrée du gaz dans les cellules de traitement, qui communiquent chacune dans leur partie supérieure avec la deuxième chambre, chaque cellule de traitement à l'exception de celle du bas entrant, par sa partie inférieure limitée par ses parois, dans la partie supérieure de la cellule située dessous et communiquant avec cette cellule par un orifice de passage, caractérisé en ce que les cellules de traitement (5), ou les parois (8, 8'; 9, 9') les limitant, font partie d'un ensemble du genre rotor monté tournant autour de la direction axiale (S) et mis en rotation, et en ce que le(s) conduit(s) (24) d'amenée d'agent de traitement frais (23) est (sont) fixe(s) et présente(nt) des parties (26), entrant dans les orifices supérieurs d'entrée (27), pourvues d'orifices pour l'amenée de l'agent de traitement (23).

2. Appareil selon la revendication 1, caractérisé en ce que les dispositifs de déblaiement (35) sont fixes.

3. Appareil selon les revendications 1 et 2, caractérisé en ce que le(s) conduit(s) (24) d'amenée de l'agent de traitement frais (23) est (sont) situé(s) à l'extérieur radialement de l'ensemble du genre rotor et les dispositifs de déblaiement (35) sont situés à l'intérieur radialement de cet ensemble.

4. Appareil selon l'une des revendications 1 à 3, caractérisé en ce que les dispositifs de déblaiement (35) sont prévus sur au moins un conduit collecteur fixe (36) destiné à l'évacuation de l'agent de traitement (23'), en ce qu'il est prévu des moyens de transport (40) destinés à conduire l'agent de traitement (23') évacué des cellules de traitement (5) à un dispositif (41, 42) d'épuration et/ou de retraitement qui communique avec une chambre (25) destinée à recevoir l'agent de traitement frais ou épuré ou retraité (23) qui communique elle-même avec le(s) conduit(s) d'amenée de l'agent de traitement (23) aux cellules de traitement (5), et en ce qu'il est prévu des moyens de chauffage de l'agent de traitement avant son épuration ou son retraitement.

5. Appareil selon la revendication 4, caractérisé en ce que les moyens de chauffage de l'agent de traitement (23') sont formés d'au moins une buse ou un orifice de sortie d'air ou de gaz chauffé.

6. Appareil selon l'une des revendications 1 à 5, caractérisé par une entrée (19) pour le gaz prévue sur la première chambre (7) en haut de celle ci.

Fig.1

Fig.2